# EUROPÄISCHE PATENTSCHRIFT

(11) **EP 3 764 075 B1**
(45) Veröffentlichungstag und Bekanntmachung des Hinweises auf die Patenterteilung: **13.03.2024**
(21) Anmeldenummer: 20184848.8
(22) Anmeldetag: 09.07.2020
(51) Int. Cl.: G01M 99/00, B61D 23/00

(54) **VORRICHTUNG ZUM MESSEN EINER KRAFT IN VERSCHIEBERICHTUNG EINES IN DIE VERSCHIEBERICHTUNG VERSCHIEBBAREN TRITTBRETTS EINES SCHIENENFAHRZEUGS**
DEVICE FOR MEASURING A FORCE IN THE DISPLACEMENT DIRECTION OF A FOOTBOARD OF A RAILWAY VEHICLE SLIDABLE IN THE DISPLACEMENT DIRECTION
DISPOSITIF DE MESURE D'UNE FORCE DANS LA DIRECTION DE COULISSEMENT D'UN GARDE-PIED D'UN VÉHICULE FERROVIAIRE COULISSANT DANS LA DIRECTION DE COULISSEMENT

(30) Priorität: 12.07.2019 DE 102019118938
(43) Veröffentlichungstag der Anmeldung: 13.01.2021
(73) Patentinhaber: ALSTOM Holdings, 93400 Saint-Ouen-sur-Seine (FR)
(72) Erfinder: KUCHNIA, Daniel, 38228 Salzgitter (DE); ZYDEK, Heiko, 38300 Wolfenbüttel (DE); SCHIEBEL, Markus, 01069 Dresden (DE)
(74) Vertreter: Lavoix

(56) Entgegenhaltungen:
- EP-A1- 2 876 425
- WO-A1-2018/032049
- DE-A1- 10 351 988
- DE-U1-202015 100 566
- GB-A- 2 546 344
- US-A- 5 325 700
- US-A1- 2015 219 511

## Beschreibung

Die vorliegende Erfindung betrifft eine Vorrichtung zum Messen einer Kraft in Verschieberichtung eines in die Verschieberichtung verschiebbaren Trittbretts eines Schienenfahrzeugs.

US 5 325 700 A beschreibt das Testen einer Dämpfungsvorrichtung für ein Schienenfahrzeug, indem eine Kraft aufgebracht wird, die erforderlich ist, um die Dämpfungsvorrichtung in einer kontrollierten Bewegung mit einer vorgegebenen Geschwindigkeit oder Geschwindigkeiten gemäß einem Bewegungsprofil zu bewegen.

GB 2 546 344 A beschreibt ein Prüfsystem für einen Fahrzeugunterbau.

US 2015/219511 A1 beschreibt eine Vorrichtung zur Auswertung einer Türschließung.

DE 103 51 988 A1 beschreibt eine Trittplattenanordnung.

Es sind Schienenfahrzeuge bekannt, welche Trittbretter aufweisen, die dazu geeignet sich, sich beispielsweise bei einem Halt an einem Bahnsteig in einer Verschieberichtung zu verschieben, um das Ein- und Aussteigen zu erleichtern. Dabei sind diese Trittbretter insbesondere dazu geeignet, sich senkrecht zu einer Längsrichtung der Schienen zu verschieben, um einen eventuellen Spalt zwischen dem Schienenfahrzeug und dem Bahnsteig zumindest teilweise zu überbrücken.

Solche verschiebbaren Trittbretter werden typischerweise mit einem elektrischen Motor angetrieben. Wenn ein Widerstand während der Verschiebung mit dem Trittbrett in Berührung kommt, übt das Trittbrett auf den Widerstand eine bestimmte Kraft aus. Diese Kraft muss einen Mindestwert aufweisen, sodass eventuelle Reibung einer Mechanik des Trittbretts überwunden wird. Andererseits darf die Kraft nicht einen Maximalwert überschreiten, um beispielsweise Verletzungen von Personen, die beispielsweise ein Körperglied zwischen Trittbrett und Bahnsteig angeordnet haben, welches einen Widerstand zur Verschiebung des Trittbretts hervorruft, zu vermeiden. Die Kraft, mit welcher das Trittbrett verschoben wird, muss also in einem bestimmten Bereich liegen.

Eine Messung der Kraft in Verschieberichtung ist daher notwendig. Es sind Messvorrichtungen bekannt, wie beispielsweise in EP 2 876 425. Diese Vorrichtungen erfordern jedoch eine externe Infrastruktur, wie zum Beispiel einen Bahnsteig oder eine Wartungshalle für eine Montage und Verwendung der Vorrichtung. Sie sind daher wenig flexibel einsetzbar.

Demnach ist es eine Aufgabe der vorliegenden Erfindung, die oben genannten Nachteile zumindest zu verringern oder zu beheben. Insbesondere ist eine Aufgabe der vorliegenden Erfindung, eine flexible und ortsunabhängige Messung der Kraft in Verschieberichtung eines in die Verschieberichtung verschiebbaren Trittbretts eines Schienenfahrzeugs zu ermöglichen.

Erfindungsgemäß wird diese Aufgabe gelöst durch eine Vorrichtung gemäß Anspruch 1.

Die erfindungsgemäße Vorrichtung ermöglicht eine flexible und ortsunabhängige Messung der Kraft in Verschieberichtung. Insbesondere benötigt die erfindungsgemäße Vorrichtung keine weitere Abstützung außer der mindestens einen Schiene. Die Vorrichtung ist somit an beliebigen Orten einsetzbar, beispielsweise auf einem beliebigen Ort eines Schienennetzes, an welchem sich das entsprechende Schienenfahrzeug befindet. Zudem ist die Vorrichtung sehr flexibel einsetzbar, da durch eine vollständige Abstützung der Vorrichtung durch die mindestens eine Schiene insbesondere keine besondere Abstützfläche seitlich der mindestens einen Schiene benötigt wird.

Zudem ist die Vorrichtung insbesondere flexibel einsetzbar, da sie einfach montierbar und demontierbar ist und zudem einfach an einen benötigten Messort transportiert werden kann.

Gemäß bevorzugten Ausführungsformen ist die erfindungsgemäße Vorrichtung gemäß irgendeinem der Ansprüche 2 bis 8.

Die Erfindung betrifft außerdem ein Verfahren gemäß Anspruch 9.

Bevorzugte Ausführungsformen der Erfindung werden nun anhand der Zeichnungen im Detail beschreiben, wobei:
- Figur 1 eine Schnittansicht eines Teils eines Schienenfahrzeugs und einer Vorrichtung zum Messen gemäß der Erfindung ist, und
- Figur 2 eine perspektivische Ansicht eines Teils der Vorrichtung gemäß Figur 1 ist.

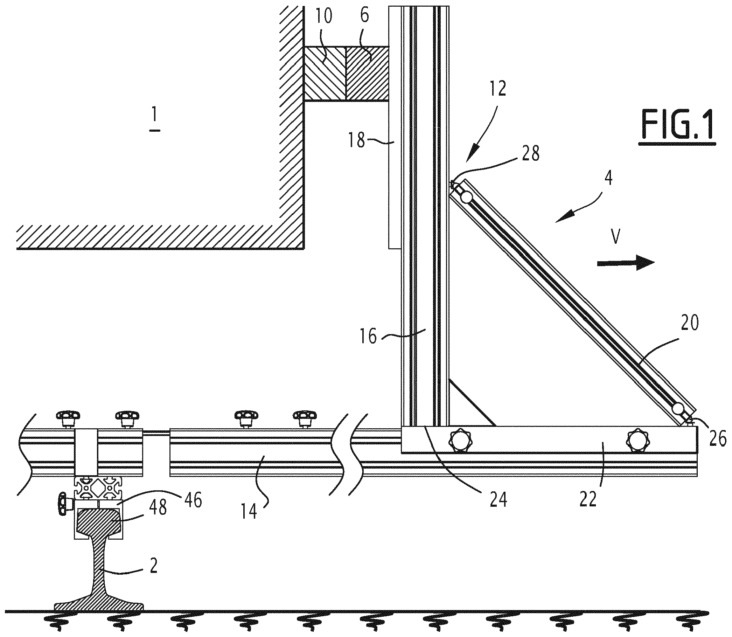

Die Figur 1 zeigt einen Teil eines Schienenfahrzeugs 1, eine Schiene 2, eine Vorrichtung 4 und einen Sensor 6, welcher lösbar an der Vorrichtung 4 befestigt ist.

Das Schienenfahrzeug 1 ist dazu eingerichtet, auf mindestens zwei Schienen 2 positioniert zu werden. Gemäß Ausführungsbeispielen ist das Schienenfahrzeug 1 dazu eingerichtet, auf zwei oder auf mehr als zwei Schienen 2 positioniert zu sein. Die Schienen geben die Fahrtrichtung des Schienenfahrzeugs 1 vor.

Das Schienenfahrzeug 1 umfasst zumindest ein Trittbrett 10, welches entlang einer Verschieberichtung V verschiebbar ist. Das Trittbrett 10 ist beispielsweise durch einen elektrischen Motor (nicht dargestellt) oder durch eine anderweitige Verschiebemechanik angetrieben, beispielsweise hydraulisch oder pneumatisch. Die Verschieberichtung V ist eine Richtung senkrecht zu einer vertikalen Richtung sowie senkrecht zu einer Längsrichtung und/oder Fahrtrichtung des Schienenfahrzeugs 1. Die Längsrichtung des Schienenfahrzeugs 1 ist diejenige Richtung, entlang der das Schienenfahrzeug 1 während der Fahrt fortbewegt. In einer Ausführungsform ist die Verschieberichtung V insbesondere senkrecht zu der mindestens einen Schiene 2. Jedoch können auch andere Verschieberichtungen für das Trittbretts 10 vorgesehen sein, beispielsweise schräg zur senkrechten zu der mindestens einen Schiene.

Der Sensor 6 ist dazu geeignet, die Kraft in Verschieberichtung V des Trittbretts 10 zu messen. Der Aufbau eines solchen Sensors 6 ist an sich bekannt, und ist beispielsweise ein Sensor der Firma TESTEM Gesellschaft für Mess- und Datentechnik mbH, Alling, Deutschland.

Die Vorrichtung 4 ist dazu eingerichtet, eine Messung einer Kraft in Verschieberichtung V des in die Verschieberichtung V verschiebbaren Trittbretts 10 zu ermöglichen.

Die Vorrichtung 4 umfasst einen Sensorträger 12, der dazu eingerichtet ist, den Sensor 6 für die Messung der Kraft in Verschieberichtung V zu tragen sowie einen Basisträger 14, welcher mit dem Sensorträger 12 lösbar verbunden ist. Der Basisträger 14 ist dazu geeignet, an der Schiene 2 derart lösbar befestigt zu werden, dass die Vorrichtung 4 zum Messen vollständig von den mindestens zwei Schienen 2 abgestützt werden kann.

Unter "vollständig von den mindestens zwei Schienen abgestützt" wird im Kontext der vorliegenden Erfindung verstanden, dass das gesamte Gewicht der Vorrichtung 4 sowie eventuell zusätzlich an der Vorrichtung 4 angreifenden Kräfte von der Schienen 2 abgestützt werden. Die Vorrichtung 4 ist insbesondere so eingerichtet, dass sowohl Zug- als auch Druckkräfte auf die Schienen 2 übertragen werden. In einer bevorzugten Ausführungsform der Erfindung ist eine zusätzliche Installation, beispielsweise ein präparierter Boden zum Abstützen der Vorrichtung 4, insbesondere des Basisträgers 14, ist nicht erforderlich. Mit anderen Worten kann der Basisträger beispielsweise freischwebend über dem die Schienen 2 umgebenden Boden angeordnet werden.

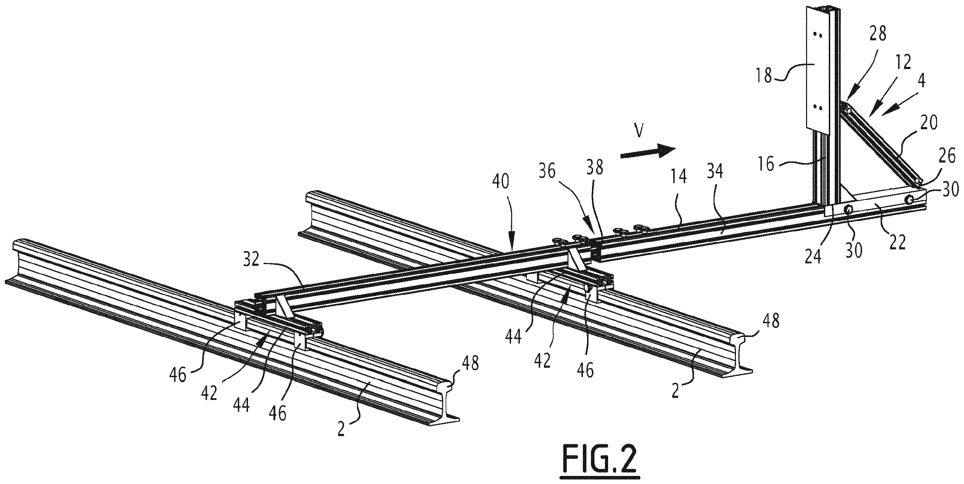

Die Vorrichtung 4 insbesondere dazu geeignet ist, ausschließlich auf den mindestens zwei Schienen 2 abgestützt zu sein, wie beispielsweise in Figur 2 dargestellt.

Der Sensorträger 12 ist insbesondere in Bezug auf die Schiene 2 entlang einer Bewegungsrichtung bewegbar, um eine Distanz zwischen einer der mindestens zwei Schienen 2 und dem Sensorträger 12 einzustellen. Beispielsweise ist der Sensorträger 12 so eingerichtet, dass er parallel zur Verschieberichtung V des Trittbretts 10 verschiebbar ist. Gemäß einem bevorzugten Ausführungsbeispiel ist er senkrecht zu einer der mindestens zwei Schienen 2 verschiebbar. Die Bewegungsrichtung ist vorzugsweise parallel zur Verschieberichtung V.

Der Sensorträger 12 umfasst zum Beispiel einen Vertikalträger 16, eine Sensorplatte 18, eine Stütze 20 sowie einen Schlitten 22, welcher ein unteres Ende 24 des Vertikalträgers 16 mit einem unteren Ende 26 der Stütze 20 verbindet. Der Vertikalträger 16 weist insbesondere eine vertikale Längsrichtung auf. Der Vertikalträger 16, die Stütze 20 und der Schlitten 22 bilden ein Dreieck in einer ersten vertikalen Ebene I, welche einen Vektor der Verschieberichtung beinhaltet. Die erste vertikale Ebene I entspricht der Schnittebene der Figur 1. Insbesondere ist der Vertikalträger 16 senkrecht zum Schlitten 22 angeordnet.

Gemäß einem Ausführungsbeispiel ist die Sensorplatte 18 lösbar an dem Vertikalträger 16 befestigt. Die Sensorplatte 18 ist insbesondere so befestigt, dass sie sich in einer zweiten vertikalen Ebene, welche senkrecht zur ersten vertikalen Ebene I steht, befindet. Die Sensorplatte 18 ist insbesondere für die Befestigung des Sensors 6 zum Messen der Kraft geeignet, sodass der Sensor 6 in Richtung des Trittbretts 10 ausgerichtet ist.

Die Stütze 20 ist an einem oberen Ende 28 mit dem Vertikalträger 16 und am unteren Ende 26 mit dem Schlitten 22 verbunden. Die Stütze 20 ist dazu geeignet, eine Kraft, insbesondere eine Kraft, welche eine Komponente in waagerechter Richtung aufweist, vom Vertikalträger 16 auf den Schlitten 22 zu übertragen. Beispielsweist ist die Stütze 20 dazu geeignet, eine Kraft, welche vom Trittbrett 10 über den Sensor 6 auf den Vertikalträger 16 aufgebracht wird, auf den Schlitten 22 zu übertragen.

Der Schlitten 22 ist dazu eingerichtet, auf dem Basisträger 14 in Bewegungsrichtung des Sensorträgers 12 zu gleiten. Der Schlitten 22 formt beispielsweise, in einer Ebene parallel zur zweiten vertikalen Ebene, einen Querschnitt eines umgekehrten "U". Der Schlitten 22 weist zudem Fixierungselemente 30 auf, welche dazu eingerichtet sind, den Schlitten 22 lösbar am Basisträger 14 zu fixieren. Insbesondere sind die Fixierungselemente 30 dazu geeignet, den Schlitten 22 stufenlos in einem gewünschten Abstand zur Schiene 2 zu befestigen. Die Fixierungselemente 30 sind insbesondere Elemente, welche eine lösbare Befestigung des Schlittens 22 am Basisträger 14 ermöglichen, wie beispielsweise Schrauben.

Der Basisträger 14 weist eine Längsrichtung auf, welche insbesondere parallel zur Verschieberichtung V ist. Der Basisträger 14 weist insbesondere einen konstanten Querschnitt entlang der Längsrichtung auf, beispielsweise einen rechteckigen Querschnitt, insbesondere um ein Gleiten des Basisträgers 14 auf dem Schlitten 22 zu ermöglichen.

Der Basisträger 14 umfasst beispielsweise mindestens ein erstes Element 32 und ein zweites Element 34. Das erste Element 32 ist zum Beispiel lösbar an einer der mindestens zwei Schienen 2 befestigt ist und das zweite Element 34 ist lösbar am ersten Element 32 befestigt und erstreckt sich von dieser Schiene 2 weg. Gemäß einem Ausführungsbeispiel weisen das erste und das zweite Element 32, 34 einen gleich großen Querschnitt auf, beispielsweise einen rechteckigen Querschnitt. Gemäß einem Ausführungsbeispiel weist der Basisträger 14 ein Verbindungselement 36 auf, welches dazu eingerichtet ist, das zweite Element 34 an einem Ende 38 des ersten Elements 32 so zu befestigen, dass das zweite Element 34 eine Verlängerung des ersten Elements in Verschieberichtung V bildet. Das Verbindungselement 36 umfasst beispielsweise eine Struktur sowie Schrauben auf. Die Struktur ist dazu geeignet, in eine oder mehrere Längsnuten (weiter unten beschrieben) des ersten und zweiten Elements 32, 34 einzugreifen und durch die Schrauben befestigt zu werden.

Der Basisträger 14 weist beispielsweise mindestens eine Längsnut 40 auf, in die der Schlitten 22 und/oder der Sensorträger 12 eingreift. Der Schlitten 22 und/oder der Sensorträger 12 weist insbesondere eine dazu geeignete Einrichtung auf, welche eine komplementäre Form zu der Längsnut 40 aufweist, in welche die Einrichtung eingreift.

Gemäß einem Ausführungsbeispiel weist der Basisträger 14 mindestens ein Befestigungselement 42 für eine lösbare Befestigung des Basisträgers 14 an den mindestens zwei Schienen 2 auf. Das Befestigungselement 42 weist insbesondere eine komplementäre Form zur Schiene 2 auf. Unter "komplementärer Form" wird dabei verstanden, dass das Befestigungselement 42 zumindest einen Teil aufweist, welcher einer an der Schiene 2 angepasste Form aufweist.

Ein Beispiel der Befestigungselemente 42 ist insbesondere in Figur 2 sichtbar. Das Befestigungselement 42 umfasst einen Befestigungsträger 44, welcher am Basisträger 14 befestigt ist, sowie mindestens eine Griffeinrichtung 46, welche dazu eingerichtet ist, die eine Schiene 2 zu umgreifen. Die Griffeinrichtung 46 weist vorzugsweise eine komplementäre Form zur Schiene auf. Die Griffeinrichtung 46 umfasst beispielsweise zwei Zangen, welche dazu geeignet sind, einen Schienenkopf 48 der einen Schiene 2 zu umgreifen. Die Zangen weisen zudem beispielsweise einen Knauf (nicht dargestellt) auf, welcher ein Schließen der Zangen ohne Werkzeuge ermöglicht.

Das Befestigungselement 42 ist insbesondere dazu eingerichtet, sowohl horizontale als auch vertikale Kräfte zwischen dem Basisträger 14 und der einen Schiene 2 zu übertragen.

Insbesondere ist das Befestigungselement 42 dazu geeignet, sowohl Zug- als auch Druckkräfte zwischen dem Basisträger 14 und der Schiene 2 zu übertragen.

Im Folgenden wird ein Verfahren zum Messen der Kraft in Verschieberichtung V des Trittbretts 10 beschrieben. Das Verfahren wird durch die oben beschriebene Vorrichtung 4 und einen Sensor 6 für eine Messung der Kraft in Verschieberichtung V ausgeführt. Beispielsweise wird das Verfahren mit Hilfe einer Bedienungsperson ausgeführt.

Das Verfahren umfasst einen ersten Montageschritt, einen zweiten Montageschritt und einen Messschritt.

Während des ersten Montageschritts, wird der Basisträger 14 an den Schienen 2 so lösbar befestigt, dass die Vorrichtung 4 zum Messen vollständig von den mindestens zwei Schienen 2 abgestützt wird. Dabei wird der Basisträger 14 insbesondere mittels des Befestigungselements 42 an einer der Schienen 2 befestigt.

Gemäß einem Ausführungsbeispiel wird zunächst das erste Element 32 des Basisträgers 14 an einer der Schienen 2 befestigt, und anschließend das zweite Element 34 des Basisträgers 14 am ersten Element 32 mittels des Verbindungselements 36 befestigt. Insbesondere wird das zweite Element 34 auf derjenigen Seite quer zur Schiene 2 befestigt, auf der eine Messung der Kraft durchgeführt werden soll.

Während des zweiten Montageschritts wird Sensorträger 12 mit dem Basisträger 14 lösbar verbunden. Gemäß einem Ausführungsbeispiel stützt der Sensorträger 12 den Sensor 6 seitlich und/oder horizontal für die Messung der Kraft in Verschieberichtung V .

Während des Messschritts wird das Trittbrett 10 in Verschieberichtung V verschoben und der Sensor 6 misst die Kraft in Verschieberichtung V. Die Vorrichtung 4 ist insbesondere an einer festen Position gegenüber der Schiene 2 während des Messschritts.

In einem alternativen Ausführungsbeispiel kann auch ein mobiler Sensor 6 verwendet werden. Der mobile Sensor 6 ist zum Beispiel ein von einer Bedienperson tragbarer Sensor. Bei diesem Ausführungsbeispiel wird während des zweiten Montageschritts der Sensorträger 12 mit dem Basisträger 14 lösbar verbunden. Der Sensor 6 jedoch nicht an dem Sensorträger 12 befestigt. Mit anderen Worten, wird der Sensorträger 12 ohne einen Sensor 6 mit dem Basisträger lösbar verbunden.

Während des Messschritts wird der Sensor 6 zwischen das Trittbrett 10 und den Sensorträger 12 angeordnet, insbesondere ohne den Sensor 6 an dem Sensorträger 12 zu befestigen, wobei eine Seite des Sensors 6 mit den Sensorträger 12 während des Messschritts in Kontakt steht, um den Sensor 6 seitlich zu stützen. Beispielsweise kann die Bedienungsperson den Sensor 6 entsprechend anordnen. Das Trittbrett 10 wird in Verschieberichtung V verschoben und der Sensor 6 misst die Kraft in Verschieberichtung.

Das Verfahren wird beispielsweise mehrmals wiederholt für die Messung der Kraft mehrerer Trittbretter 10.

Beispielsweise wird auch die Kraft in Verschieberichtung V von jeweils zwei gegenüberlegenden Trittbrettern 10 gemessen, welche entlang der Längsrichtung des Schienenfahrzeugs 1 an der gleichen Stelle angeordnet sind. Für die Messung von einem ersten Trittbrett 10 und einem zweiten gegenüberliegenden Trittbrett 10 wird beispielsweise zunächst das oben beschriebene Verfahren für das erste Trittbrett 10 ausgeführt. Nach dem Messschritt wird insbesondere nur das zweite Element 34 des Basisträgers 14 und der Sensorträger 12 demontiert und das zweite Element 34 und der Sensorträger 12 werden auf einer gegenüberlegen Seite bezüglich der Schiene 2 montiert. Insbesondere bleibt das erste Element 32 des Basisträgers 14 an der Schiene 2 befestigt. Anschließend wird das oben beschrieben Verfahren für das zweite Trittbrett 10 durchgeführt.

## Patentansprüche

1. Vorrichtung (4) zum Messen einer Kraft in Verschieberichtung (V) eines in die Verschieberichtung (V) verschiebbaren Trittbretts (10) eines Schienenfahrzeugs (1), wobei das Schienenfahrzeug (1) dazu eingerichtet ist, auf mindestens zwei Schienen (2) positioniert zu werden, **dadurch gekennzeichnet, dass** die Vorrichtung (4) umfasst:
- einen Sensorträger (12), der dazu eingerichtet ist, einen Sensor (6) für die Messung der Kraft in Verschieberichtung (V) zu stützen;
- einen Basisträger (14), welcher mit dem Sensorträger (12) lösbar verbunden ist und welcher dazu eingerichtet ist, an mindestens einer Schiene (2) der mindestens zwei Schienen (2) derart lösbar befestigt zu werden, dass die Vorrichtung (4) zum Messen vollständig von den mindestens zwei Schienen (2) abgestützt werden kann.

2. Vorrichtung nach Anspruch 1, wobei der Sensorträger (12) in Bezug auf mindestens eine Schiene (2) der mindestens zwei Schienen (2) bewegbar entlang einer Bewegungsrichtung ist, um eine Distanz zwischen der mindestens einen Schiene (2) und dem Sensorträger (12) einzustellen, wobei insbesondere der Sensorträger (12) parallel zur Verschieberichtung (V) des Trittbretts (10) und/oder senkrecht zu der mindestens einen Schiene (2) verschiebbar ist.

3. Vorrichtung nach Anspruch 2, wobei der Sensorträger (12) mindestens einen Schlitten (22) aufweist, der dazu eingerichtet ist, auf dem Basisträger (14) in Bewegungsrichtung des Sensorträgers (12) zu gleiten.

4. Vorrichtung nach Anspruch 3, wobei der Basisträger mindestens eine Längsnut (40) aufweist, in die der Schlitten (22) und/oder der Sensorträger (12) eingreift.

5. Vorrichtung nach einem der Ansprüche 1 bis 4, wobei der Basisträger (14) mindestens ein erstes und ein zweites Element (32, 34) umfasst, wobei das erste Element (32) lösbar an mindestens einer Schiene (2) der mindestens zwei Schienen (2) befestigt ist und das zweite Element (34) lösbar am ersten Element (32) befestigt ist, und das erste Element (32) von der mindestens einen Schiene (2) aus weg verlängert.

6. Vorrichtung nach Anspruch 5, wobei der Basisträger (14) ein Verbindungselement (36) aufweist, welches dazu eingerichtet ist, das zweite Element (34) an einem Ende (38) des ersten Elements (32) so zu befestigen, dass das zweite Element (34) eine Verlängerung des ersten Elements in Verschieberichtung (V) bildet.

7. Vorrichtung gemäß einem der Ansprüche 1 bis 6, wobei der Basisträger (14) mindestens ein Befestigungselement (42) für eine lösbare Befestigung des Basisträgers (14) an mindestens einer Schiene (2) der mindestens zwei Schienen (2) aufweist, wobei des Befestigungselement (42) insbesondere dazu eingerichtet ist, sowohl horizontale als auch vertikale Kräfte zwischen dem Basisträger (14) und der mindestens einen Schiene (2) zu übertragen.

8. Vorrichtung gemäß Anspruch 7, wobei das Befestigungselement (42) eine komplementäre Form zu der mindestens einen Schiene (2) aufweist.

9. Verfahren zum Messen einer Kraft in Verschieberichtung (V) eines in die Verschieberichtung (V) verschiebbaren Trittbretts (10) eines Schienenfahrzeugs (1), wobei das Schienenfahrzeug (1) auf mindestens zwei Schienen (2) positioniert ist, **dadurch gekennzeichnet, dass** das Verfahren durch eine Vorrichtung (4) und einen Sensor (6) für eine Messung der Kraft in Verschieberichtung (V) ausgeführt wird, welche einen Sensorträger (12) und einen Basisträger (14) umfasst, wobei das Verfahren umfasst:
- einen ersten Montageschritt, wobei der Basisträger (14) an mindestens einer Schiene (2) der mindestens zwei Schienen (2) so lösbar befestigt wird, dass die Vorrichtung (4) zum Messen vollständig von den mindestens zwei Schienen (2) abgestützt werden kann,
- einen zweiten Montageschritt, wobei der Sensorträger (12) mit dem Basisträger (14) lösbar verbunden wird, wobei der Sensorträger (12) den Sensor (6) stützt;
- einen Messschritt, wobei das Trittbrett (10) in Verschieberichtung (V) verschoben wird und der Sensor (6) die Kraft in Verschieberichtung (V) misst.

## Claims

1. Device (4) for measuring a force in the direction of displacement (V) of a running board (10) of a rail vehicle (1) which can be displaced in the direction of displacement (V), the rail vehicle (1) being set up to be positioned on at least two rails (2), **characterised in that** the device (4) comprises:
- a sensor carrier (12) which is designed to support a sensor (6) for measuring the force in the direction of displacement (V);
- a base support (14) which is detachably connected to the sensor support (12) and which is designed to be detachably fastened to at least one rail (2) of at least two rails (2) in such a way that the device (4) for measuring can be completely supported by at least two rails (2).

2. A device according to claim 1, wherein the sensor carrier (12) is movable in relation to at least one rail (2) of at least two rails (2) along a direction of movement in order to set a distance between at least one rail (2) and the sensor carrier (12), wherein in particular the sensor carrier (12) is displaceable parallel to the direction of displacement (V) of the running board (10) and/or perpendicular to at least one rail (2).

3. A device according to claim 2, wherein the sensor carrier (12) has at least one slide (22) which is set up to slide on the base carrier (14) in the direction of movement of the sensor carrier (12).

4. A device according to claim 3, wherein the base carrier has at least one longitudinal groove (40) in which the slide (22) and/or the sensor carrier (12) engages.

5. A device according to any one of claims 1 to 4, wherein the base support (14) comprises at least a first and a second element (32, 34), wherein the first element (32) is releasably attached to at least one rail (2) of at least two rails (2) and the second element (34) is releasably attached to the first element (32), and the first element (32) extends away from at least one rail (2).

6. A device according to claim 5, wherein the base support (14) comprises a connecting element (36) which is arranged to fasten the second element (34) to one end (38) of the first element (32) in such a way that the second element (34) forms an extension of the first element in the displacement direction (V).

7. A device according to any one of claims 1 to 6, wherein the base support (14) comprises at least one fastening element (42) for a detachable fastening of the base support (14) to at least one rail (2) of at least two rails (2), wherein the fastening element (42) is in particular adapted to transmit both horizontal and vertical forces between the base support (14) and at least one rail (2).

8. A device according to claim 7, wherein the fastening element (42) has a complementary shape to at least one rail (2).

9. A method of measuring a force in the direction of displacement (V) of a running board (10) of a rail vehicle (1) displaceable in the direction of displacement (V), the rail vehicle (1) being positioned on at least two rails (2), **characterised in that** the method is carried out by a device (4) and a sensor (6) for measuring the force in the direction of displacement (V), which comprises a sensor carrier (12) and a base carrier (14), the method comprising:
- a first assembly step, wherein the base support (14) is detachably fastened to at least one rail (2) of the at least two rails (2) such that the device (4) for measuring can be completely supported by at least two rails (2),
- a second assembly step, wherein the sensor carrier (12) is detachably connected to the base carrier (14), wherein the sensor carrier (12) supports the sensor (6);
- a measuring step, wherein the running board (10) is displaced in the direction of displacement (V) and the sensor (6) measures the force in the direction of displacement (V).

## Revendications

1. Dispositif (4) de mesure d'une force dans la direction de déplacement (V) d'un marchepied (10) d'un véhicule ferroviaire (1) pouvant être déplacé dans la direction de déplacement (V), dans lequel le véhicule ferroviaire (1) est conçu pour être positionné sur au moins deux rails (2), **caractérisé en ce que** le dispositif (4) comprend :
- un support de capteur (12), qui est conçu pour supporter un capteur (6) pour la mesure de la force dans la direction de déplacement (V) ;
- un support de base (14), lequel est relié de manière détachable au support de capteur (12) et lequel est conçu pour être fixé de manière détachable à au moins un rail (2) des au moins deux rails (2), de telle sorte que le dispositif (4) peut être entièrement soutenu par les au moins deux rails (2) pour la mesure.

2. Dispositif selon la revendication 1, dans lequel le support de capteur (12) est mobile par rapport à au moins un rail (2) des au moins deux rails (2) le long d'une direction de déplacement pour régler une distance entre le au moins un rail (2) et le support de capteur (12), dans lequel en particulier le support de capteur (12) est mobile parallèlement à la direction de déplacement (V) du marchepied (10) et/ou perpendiculairement à le au moins un rail (2).

3. Dispositif selon la revendication 2, dans lequel le support de capteur (12) présente au moins un chariot (22), qui est conçu pour coulisser sur le support de base (14) dans la direction de mouvement du support de capteur (12).

4. Dispositif selon la revendication 3, dans lequel le support de base présente au moins une rainure longitudinale (40), dans laquelle s'engage le chariot (22) et/ou le support de capteur (12).

5. Dispositif selon l'une quelconque des revendications 1 à 4, dans lequel le support de base (14) comprend au moins un premier et un deuxième éléments (32, 34), dans lequel le premier élément (32) est fixé de manière détachable à le au moins un rail (2) des au moins deux rails (2) et le deuxième élément (34) est fixé de manière détachable au premier élément (32), et le premier élément (32) s'étend à l'écart du au moins un rail (2).

6. Dispositif selon la revendication 5, dans lequel le support de base (14) présente un élément de liaison (36), lequel est conçu pour fixer le deuxième élément (34) à une extrémité (38) du premier élément (32), de sorte que le deuxième élément (34) forme un prolongement du premier élément dans la direction de déplacement (V).

7. Dispositif selon l'une quelconque des revendications 1 à 6, dans lequel le support de base (14) présente au moins un élément de fixation (42) pour une fixation libérable du support de base (14) sur au moins un rail des au moins deux rails (2), dans lequel l'élément de fixation (42) est notamment conçu pour transmettre des forces à la fois horizontales et verticales entre le support de base (14) et le au moins un rail (2).

8. Dispositif selon la revendication 7, dans lequel l'élément de fixation (42) présente une forme complémentaire à celle de l'au moins un rail (2).

9. Procédé de mesure d'une force dans la direction de déplacement (V) d'un marchepied (10) d'un véhicule ferroviaire (1) pouvant être déplacé dans la direction de déplacement (V), dans lequel le véhicule ferroviaire (1) est positionné sur au moins deux rails (2), **caractérisé en ce que** le procédé est mis en oeuvre par un dispositif (4) et un capteur (6) pour une mesure de la force dans la direction de déplacement (V), lequel comprend un support de capteur (12) et un support de base (14), dans lequel le procédé comprend :
- une première étape de montage, dans lequel le support de base (14) est fixé de manière détachable à le au moins un rail (2) des au moins deux rails (2), de telle sorte que le dispositif (4) peut être entièrement soutenu par les au moins deux rails (2) pour la mesure,
- une deuxième étape de montage, dans lequel le support de capteur (12) est relié de manière détachable au support de base (14), dans lequel le support de capteur (12) soutient le capteur (6) ;
- une étape de mesure, dans lequel le marchepied (10) est déplacé dans la direction de déplacement (V) et le capteur (6) mesure la force dans la direction de déplacement (V).
